**Europäisches Patentamt**

**European Patent Office**

**Office européen des brevets**

(19)

(11) Veröffentlichungsnummer: **0 011 247**
**B1**

# EUROPÄISCHE PATENTSCHRIFT

(12)

(45) Veröffentlichungstag der Patentschrift:
12.10.83

(21) Anmeldenummer: 79104396.1

(22) Anmeldetag: 08.11.79

(51) Int. Cl.³: **B 60 K 15/00**

(54) **Vorrichtung zur Entlüftung von Kraftstoffbehältern bei Kraftfahrzeugen.**

(30) Priorität: 09.11.78 DE 2848546

(43) Veröffentlichungstag der Anmeldung:
28.05.80 Patentblatt 80/11

(45) Bekanntmachung des Hinweises auf die Patenterteilung:
12.10.83 Patentblatt 83/41

(84) Benannte Vertragsstaaten:
DE FR GB IT SE

(56) Entgegenhaltungen:
DE-A-1 942 963
FR-A-2 069 379
FR-A-2 353 779
US-A-3 614 960
US-A-3 698 160
US-A-3 910 302
US-A-3 996 951

(73) Patentinhaber: Adam Opel Aktiengesellschaft,
Bahnhofsplatz 1 Postfach 1560, D-6090 Rüsselsheim
(DE)

(72) Erfinder: Menck, Lothar, Ing. (grad.), Kammerhofweg 31,
D-6086 Riedstadt-Leeheim (DE)
Erfinder: Rhiem, Hans, Ing. (grad.), Westring 52,
D-6500 Mainz (DE)

(74) Vertreter: Baumgarten, Jochem, Dipl.-Ing. et al, C/O
Adam Opel Aktiengesellschaft
Bahnhofsplatz 1 Postfach 1560, D-6090 Rüsselsheim
(DE)

## Vorrichtung zur Entlüftung von Kraftstoffbehältern bei Kraftfahrzeugen

Die Erfindung bezieht sich auf eine Vorrichtung zur Entlüftung von Kraftstoffbehältern bei Kraftfahrzeugen mit einer vom Kraftstoffbehälter ausgehenden, in die Atmosphäre mündenden Entlüftungsleitung, in der an der in Normallage des Fahrzeuges höchsten Stelle, z. B. am Einfüllrohr, ein Rückschlagventil zum zeitweisen Verschluss der Entlüftungsleitung angeordnet und in die Entlüftungsleitung ein Auffangbehälter zwischengeschaltet ist.

Bei der notwendigen Be- und Entlüftung von Kraftstoffbehältern in Kraftfahrzeugen besteht die Gefahr, dass unter bestimmten extremen Bedingungen Kraftstoff aus der bzw. den Entlüftungsleitungen ins Freie austritt und zu einer grossen Brandgefahr führt. Solche extremen Bedingungen können z. B. durch starkes Beschleunigen, starkes Abbremsen oder starke Querbeschleunigungen (bei Kurvenfahrt) des Fahrzeuges auftreten. Insbesondere ist hier aber auch an Situationen gedacht, bei denen das Fahrzeug infolge eines Unfalles eine starke Schräglage oder Überkopflage einnimmt. Gerade bei Unfällen muss aber eine Brandgefahr durch aus den Entlüftungsleitungen des Kraftstoffbehälters austretenden Kraftstoff unter allen Umständen vermieden werden.

Durch die DE-OS 2019736 ist eine Entlüftungssteuereinrichtung für den Fahrbetrieb eines Kraftfahrzeuges bekannt geworden, die nach dem Prinzip des Schwimmer-Kammer-Verschlusses bei Vergasern funktioniert. Zwar wird bei vollem Kraftstoffbehälter unter dynamischen Bedingungen die Schwimmerkugel angehoben und dadurch die Schwimmernadel verschlossen. Indessen wird sich aber unter statischen Bedingungen mit gleichzeitiger Erwärmung des Kraftstoffes über eine in dem rückwärtigen Teil des Kraftstoffbehälters reichende Entlüftungsleitung, die bei Schräglagen des Fahrzeuges unterhalb des Kraftstoffspiegels liegt, der durch Verdampfung entstehende Überdruck abbauen und Kraftstoff ins Freie schieben. Die bekannte Entlüftungssteuereinrichtung ist also nicht dazu geeignet, den Austritt von Kraftstoff aus den Entlüftungsleitungen bei starker Schräglage des Fahrzeuges zu verhindern. Das entsprechende gilt auch für die noch extremere Überkopflage des Fahrzeuges nach einem Unfall. Auch in diesem Fall kann aus der Entlüftungsleitung ungehindert Kraftstoff ins Freie austreten, da die Entlüftungsleitung mit dem zur Atmosphäre hin offenen Teil der Entlüftungssteuereinrichtung in Verbindung steht. Die bekannte Entlüftungssteuereinrichtung DE-OS 2019736 ist vielmehr ausschliesslich für dynamische Betriebszustände des Fahrzeuges gedacht, wobei sie zur Vermeidung des Eintrittes von flüssigem Kraftstoff in Kontrollsysteme dienen soll.

Eine ähnlich wirkende Anordnung zur Entlüftung von Kraftstoffbehältern ist auch aus der FR-PS 2069379 bekannt, mit der Abweichung, dass die Entlüftungsdämpfe aus Gründen der Luftverschmutzung nicht ins Freie gelangen sollen. Zu diesem Zweck ist ein in die Entlüftungsleitung geschalteter, mit Aktivkohle gefüllter Auffangbehälter zur Absorption der Benzindämpfe vorgesehen, der über je eine Leitung mit dem Ansaugsystem des Motors und mit am Kraftstoffbehälter angeordneten Schwimmerventilen verbunden ist. Bei einer Volltankung des Kraftstoffbehälters können die Ventile im statischen Betrieb schliessen, so dass eine Entlüftung nicht mehr möglich und die Gefahr von Tankdeformationen gegeben ist. Diese Wirkungsweise entspricht auch nicht den heute geltenden Vorschriften über die notwendige Entlüftung und Druckausgleichung von Kraftstoffbehältern (70/221 EWG). Ein weiterer wesentlicher Nachteil dieser Anordnung besteht darin, dass in Überkopflage des Fahrzeuges infolge des Schwimmerauftriebs die Ventile öffnen und Kraftstoff ungehindert ins Freie gelangen kann.

Aus der FR-PS 2353779 ist ferner eine Vorrichtung zur Entlüftung von Kraftstoffbehältern bei Kraftfahrzeugen bekannt geworden, mit einer vom Behälter ausgehenden, in die Atmosphäre mündenden Entlüftungsleitung, in der ein Kugelventil mit einer federbeaufschlagten Kugel zum zeitweisen Verschluss der Entlüftungsleitung angeordnet ist. Da sich die Kugel im normalen Fahrbetrieb in einer durch die Feder bewirkten Gleichgewichtslage befindet, kann bei bestimmten Vertikalbewegungen des Fahrzeuges oder bei durch Kraftstofferwärmung erhöhtem Dampfdruck die Kugel in unerwünschter Weise in die Schliesslage gebracht werden, mit der Folge einer möglichen Deformation des Kraftstoffbehälters bis hin zu seiner Zerstörung. Des weiteren besteht bei der bekannten Ausbildung des Ventils mit im wesentlichen zylindrischem Ventilraum die Gefahr, dass bei Kurvenfahrten des Fahrzeuges oder durch Schlingerbewegungen des Kraftstoffes überschwappender Kraftstoff das Ventilgehäuse passieren und über die Entlüftungsleitung ins Freie gelangen kann.

Aufgabe der vorliegenden Erfindung ist es, eine Entlüftungsvorrichtung der eingangs bezeichneten Art so auszugestalten, dass im normalen Betriebszustand des Fahrzeuges sämtliche Be- und Entlüftungsfunktionen zuverlässig erfüllt werden und auch bei Stellungen des Fahrzeuges, die von der Normallage stark abweichen, insbesondere für den Fall, dass das Fahrzeug nach einem Unfall auf dem Dach liegen bleibt, kein Kraftstoff aus dem Entlüftungssystem des Kraftstoffbehälters austreten kann. Durch diese Forderung soll im übrigen auch der entsprechenden Vorschrift Nr. 70/221 der EWG voll Genüge getan werden, wonach kein bzw. nur ein tropfenweiser Austritt von Kraftstoff aus dem Kraftstoffbehälter (und zwar in Mengen von weniger als 30 g pro min) erlaubt ist, um sicherzustellen, dass ein Brand des Fahrzeuges nach einem Unfall vermieden wird. Es soll ferner der ev. bei scharfer Kurvenfahrt durch Querbeschleunigungen übertretende Kraftstoff aufgefangen und in den Behälter zurückgeleitet werden. Das gleiche gilt für im statischen Zustand des Fahrzeuges bei Erwärmung des Kraftstoffes ev. in die Entlüftungsleitung gelangenden Kraftstoffes.

Nach dem Grundgedanken der Erfindung wird die gestellte Aufgabe im wesentlichen dadurch gelöst, dass bei einer Vorrichtung zur Entlüftung von Kraftstoffbehältern der eingangs erläuterten Art im Innenraum des Auffangbehälters am Boden in einer stutzenartigen Ausformung das Rückschlagventil angeordnet ist, dessen Ventilraum gegenüber dem eine Erhebung bildenden Ende der einmündenden Entlüftungsleitung durch einen zentralen Ventilsitz begrenzt ist, der mit einer innerhalb des Ventilraumes lose angeordneten Ventilkugel zusammenwirkt und dass sich von dem Ventilsitz Schrägflächen zu der Wandung der stutzenartigen Ausformung erstrecken, die als Führungsflächen für die Ventilkugel dienen.

Das erfindungsgemässe Rückschlagventil ist so ausgebildet, dass es nur in der Überkopflage bzw. bei extremen Schrägstellungen des Fahrzeuges schliesst, im normalen Betriebszustand des Fahrzeuges jedoch sämtliche Be- und Entlüftungsfunktionen gewährleistet. Das Merkmal der Integration des Rückschlagventils in einen Auffangbehälter stellt des weiteren sicher, dass bei scharfer Kurvenfahrt der eventuell durch Querbeschleunigung übertretende Kraftstoff aufgefangen und wieder in den Kraftstoffbehälter zurückgeleitet wird. Ausserdem wird durch den erfindungsgemässen Auffangbehälter vermieden, dass im statischen Zustand des Fahrzeuges bei Erwärmung des Kraftstoffes der durch Schlingerbewegungen in die Entlüftungsleitung gelangte Kraftstoff ins Freie treten kann.

Die Erfindung ist nun anhand eines Ausführungsbeispieles in der Zeichnung veranschaulicht und in der nachstehenden Beschreibung näher erläutert. Es zeigt:

Fig. 1 eine Ausführungsform einer Entlüftungsvorrichtung nach der Erfindung in Seitenansicht;

Fig. 2 einen Schnitt längs der Linie II–II in Fig. 1;

Fig. 3 einen Schnitt längs der Linie III–III in Fig. 2, und

Fig. 4 einen Schnitt längs der Linie IV-IV in Fig. 2.

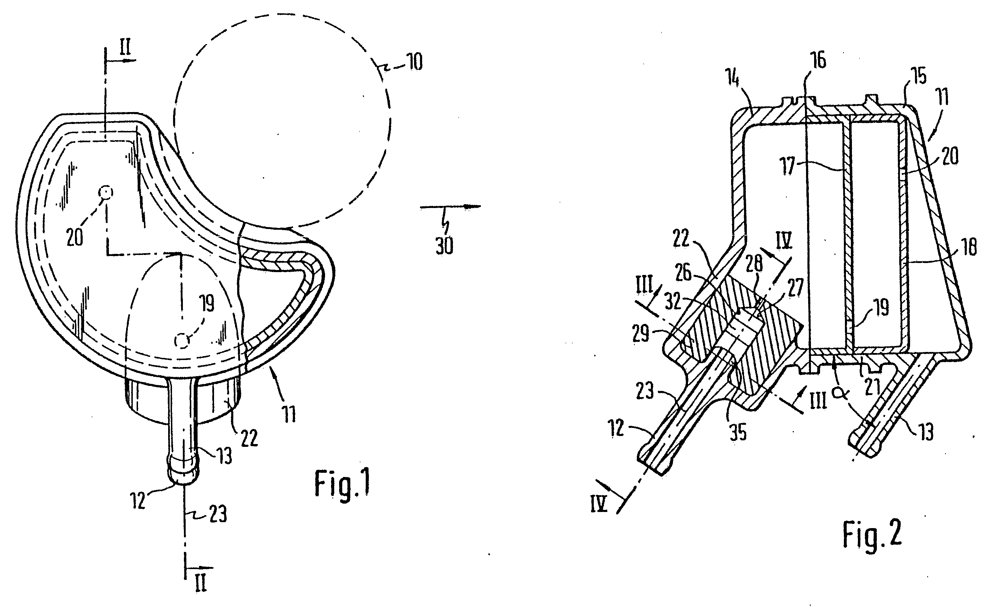

Ein am oberen Ende eines in Fig. 1 durch eine gestrichelte Linie 10 angedeuteten Einfüllrohres eines Kraftstoffbehälters (nicht gezeigt) befestigter Auffangbehälter ist mit 11 bezeichnet. Wie die Draufsicht nach Fig. 1 zeigt, ist der Auffangbehälter 11 etwa halbmond- bis sichelförmig ausgebildet, wobei er das Einfüllrohr 10 des Kraftstoffbehälters an seinem Umfang teilweise umschliesst. Der Auffangbehälter 11 ist Teil eines Entlüftungssystems, welches zum anderen Teil durch die übliche (und daher im Einzelnen nicht gezeigte Entlüftungsleitung) gebildet wird. Der Auffangbehälter 11 ist hierbei zwischen einen von dem Kraftstoffbehälter kommenden Teil der Entlüftungsleitung und einem vom Auffangbehälter in die freie Atmosphäre führenden weiteren Teil der Entlüftungsleitung zwischengeschaltet. Er weist zu diesem Zweck zwei Leitungsanschlüsse 12 und 13 auf, von denen der Leitungsanschluss 12 für den vom Kraftstoffbehälter kommenden Leitungsteil und der Leitungsanschluss 13 für den in die freie Atmosphäre führenden Leitungsteil vorgesehen ist. Die beiden Leitungsanschlüsse 12 und 13 sind etwa parallel zueinander an den mit 21 bezeichneten Boden des Auffangbehälters 11 angeordnet und bilden gegenüber dem Boden 21 einen Winkel $\alpha$ von etwa 55°.

Wie insbesondere Fig. 1 zeigt, besteht der Auffangbehälter 11 aus zwei äusseren Schalen 14 und 15, die bei 16 luft- und kraftstoffdicht zusammengefügt sind. In das Teil 15 des Auffangbehälters 11 sind Zwischenwände 17 und 18 kraftstoffdicht eingesetzt. Hierdurch wird ein direkter Übertritt von Kraftstoff aus dem Leitungsanschluss 12 in den Leitungsanschluss 13 bzw. die dort angeschlossene und ins Freie führende Entlüftungsleitung vermieden. Der Luft- bzw. Dampfübertritt von dem Leitungsanschluss 12 zum Leitungsanschluss 13 ist jedoch durch Entlüftungsbohrungen 19 bzw. 20 in den Zwischenwänden 17 bzw. 18 gewährleistet.

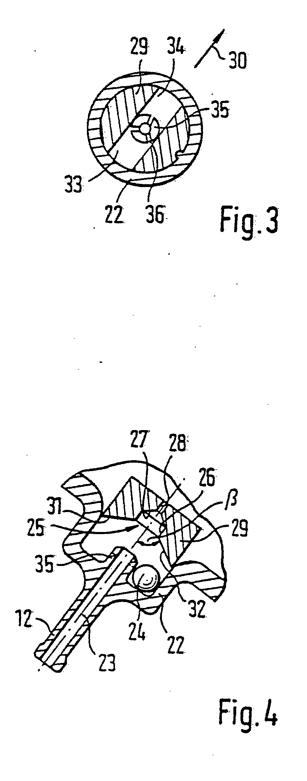

Wie weiterhin insbesondere aus Fig. 2 hervorgeht, weist der Auffangbehälter 11 an seinem Boden 21 eine stutzenartige Ausformung 22 auf, an den – konzentrisch zu seiner mit 23 bezeichneten Mittelachse der bereits erwähnte Leitungsanschluss 12 für den vom Kraftstoffbehälter kommenden Teil der Entlüftungsleitung angeformt ist. Innerhalb der stutzenartigen Ausformung 22 ist – wie insbesondere Fig. 4 zeigt – ein Rückschlagventil angeordnet, welches im wesentlichen aus einer Ventilkugel 24 und einem mit dieser zusammenwirkenden Ventilsitz 25 besteht. Der Ventilsitz 25 wird im Einzelnen gebildet durch eine etwa 3 mm lange Sacklochbohrung 26, die zunächst in einen konisch abgesetzten Teil 27 und schliesslich in eine enge Bohrung 28 von etwa 1,5 mm Durchmesser übergeht. Die Ventilkugel 24 hat etwa einen Durchmesser von 6 mm, wohingegen die Sacklochbohrung einen Durchmesser von etwa 7 mm aufweist, so dass die Ventilkugel leicht zu der konischen Fläche 27 des Ventilsitzes 25 gelangen kann. Insbesondere Fig. 4 macht weiterhin deutlich, dass der Ventilsitz 25 von einem in der stutzenartigen Ausformung 22 angeordneten Einsatz 29 gebildet wird. Der Einsatz 29 weist eine in Fahrzeuglängsrichtung 30 (Fig. 1) gerichtete Schlitzung auf, die stirnseitig durch zwei zu dem Ventilsitz 25 hin führende Schrägflächen 31, 32 begrenzt ist. Durch die Schlitzung wird der Ventilraum innerhalb der stutzenartigen Ausformung 22 in Verbindung mit der Erhebung 35 in zwei Ventilkammern 33 und 34 unterteilt (Fig. 3), die jeweils parallel zur Fahrzeuglängsachse (Pfeilrichtung 30) liegen.

Aus Fig. 2 und 4 ist weiterhin ersichtlich, dass der bei 12 in den Auffangbehälter 11 einmündende Teil der Entlüftungsleitung am Boden 21 der stutzenartigen Ausformung 22 eine Erhebung 35 bildet, die in ihrer Höhe etwa dem Durchmesser der Ventilkugel 24 entspricht. Die Erhebung 35 weist drei in gleichmässigen Winkelabständen von jeweils 120° zueinander angeordnete radiale Entlastungsschlitze 36 auf (Fig. 3).

Die in der Zeichnung gezeigte und im Vorstehenden beschriebene erfindungsgemässe Entlüftungsvorrichtung arbeitet nun wie folgt: Gelangt das Fahrzeug, z. B. durch einen Unfall, in eine starke Schräglage oder in eine Überkopflage, so fällt die Ventilkugel 24 aufgrund ihres Eigengewichtes in den Ventilsitz 25 und verschliesst damit die Verbindung zwischen den beiden Leitungsanschlüssen 12, 13. Hierbei wirken die beiden Schrägflächen 31, 32 im Einsatz 29 als Führungsflächen für die Ventilkugel 24. Die Unterteilung des Raumes 34 durch die Erhebung 35 in die zwei Kammern 33, 34 verhindert unerwünschte Vertikalbewegungen der Ventilkugel 24 während des normalen Fahrbetriebes. Für diesen Fall wird durch die als Prallflächen dienenden Schrägflächen 31, 32 ein Verschluss des Ventils durch im Behälter anstehenden Druck und infolge direkten Auftreffens der Kugel 24 auf den Ventilsitz 25 vermieden. Fällt während des Fahrbetriebes infolge von Schwappbewegungen im Kraftstoffbehälter in der Entlüftungsleitung Kraftstoff an, so gelangt dieser lediglich in den Auffangbehälter 11, nicht aber in den in die freie Atmosphäre führenden Leitungsanschluss 13. Da das Rückschlagventil 24, 25 im normalen Fahrbetrieb, wie beschrieben, stets offen ist, kann der in dem Auffangbehälter 11 befindliche Kraftstoff durch den Leitungsanschluss 12 und die mit diesem verbundene Entlüftungsleitung allmählich wieder zurück in den Kraftstoffbehälter gelangen. In den beschriebenen Extremsituationen ist dagegen das Rückschlagventil 24, 25 geschlossen, so dass überhaupt kein Kraftstoff in den Auffangbehälter 11 bzw. von diesem ins Freie gelangen kann.

**Patentansprüche**

1. Vorrichtung zur Entlüftung von Kraftstoffbehältern bei Kraftfahrzeugen mit einer vom Kraftstoffbehälter ausgehenden, in die Atmosphäre einmündenden Entlüftungsleitung (12, 13), in der an der in Normallage des Fahrzeuges höchsten Stelle, z. B. am Einfüllrohr ein Rückschlagventil (24, 25) zum zeitweisen Verschluss der Entlüftungsleitung angeordnet und in die Entlüftungsleitung ein Auffangbehälter (11) zwischengeschaltet ist, dadurch gekennzeichnet, dass im Innenraum des Auffangbehälters am Boden in einer stutzenartigen Ausformung (22) das Rückschlagventil (24, 25) angeordnet ist, dessen Ventilraum (33, 34) gegenüber dem eine Erhebung (35) bildenden Ende der einmündenden Entlüftungsleitung durch einen zentralen Ventilsitz (25) begrenzt ist, der mit einer innerhalb des Ventilraumes (33, 34) lose angeordneten Ventilkugel (24) zusammenwirkt und dass sich von dem Ventilsitz (25) Schrägflächen (31, 32) zu der Wandung der stutzenartigen Ausformung (22) erstrecken, die als Führungsflächen für die Ventilkugel (24) dienen.

2. Vorrichtung nach Anspruch 1, dadurch gekennzeichnet, dass die Erhebung (35) in ihrer Höhe etwa dem Durchmesser der Ventilkugel (24) entspricht.

3. Vorrichtung nach Anspruch 2, dadurch gekennzeichnet, dass die Erhebung (35) mehrere, vorzugsweise drei in gleichmässigen Winkelabständen von jeweils 120° zueinander angeordnete, radiale Entlastungsschlitze (36) aufweist.

4. Vorrichtung nach einem oder mehreren der Ansprüche 1 bis 3, dadurch gekennzeichnet, dass in der stutzenartigen Ausformung (22) ein den Ventilsitz (25) und die Schrägflächen (31, 32) bildender Einsatz (29) angeordnet ist.

5. Vorrichtung nach Anspruch 4, dadurch gekennzeichnet, dass der Einsatz (29) eine in der Breite etwa dem Durchmesser der Ventilkugel (24) entsprechende Schlitzung aufweist, durch die der Ventilraum in zwei Kammern (33, 34) unterteilt ist.

6. Vorrichtung nach Anspruch 5, dadurch gekennzeichnet, dass durch den oberen stirnseitigen Abschluss der Schlitzung im Einsatz (29) zwei diametral gegenüberliegende zwischen sich den Ventilsitz (25) einschliessende Schrägflächen (31, 32) zur Führung der Ventilkugel (24) gebildet werden.

7. Vorrichtung nach Anspruch 5 oder 6, dadurch gekennzeichnet, dass die durch die Schlitzung im Einsatz (29) gebildeten beiden Ventilkammern (33, 34) parallel zur Fahrzeuglängsachse (Pfeilrichtung 30) angeordnet sind.

8. Vorrichtung nach einem oder mehreren der vorstehenden Ansprüche, dadurch gekennzeichnet, dass der Ventilsitz (25) durch eine Sacklochbohrung (26) gebildet wird, deren Durchmesser etwas grösser als der Durchmesser der Ventilkugel (24) ist, und dass die Sacklochbohrung in rückwärtiger Verlängerung über eine konische Abstufung (27) auf eine Bohrung (28) von etwa 1,5 mm Durchmesser verjüngt ist.

9. Vorrichtung nach einem oder mehreren der Ansprüche 1 bis 8, dadurch gekennzeichnet, dass die Schrägflächen (31, 32) zu der Längsmittelachse (23) der stutzenartigen Ausformung (11) jeweils einen Winkel ($\beta$) von etwa 60° bilden.

10. Vorrichtung nach einem oder mehreren der vorstehenden Ansprüche, dadurch gekennzeichnet, dass der Anschluss (13) für den in die freie Atmosphäre mündenden Teil der Entlüftungsleitung parallel zu dem Anschluss (12) des von dem Kraftstoffbehälter kommenden Teiles der Entlüftungsleitung am Boden (21) des Auffangbehälters (11) angeordnet ist.

11. Vorrichtung nach Anspruch 10, dadurch gekennzeichnet, dass die beiden Anschlüsse (12, 13) für die Entlüftungsleitung zu dem Boden (21) des Auffangbehälters (11) unter einem Winkel ($\alpha$) von etwa 55° stehen, wobei sie von dem Einfüllrohr (10) des Kraftstoffbehälters weggerichtet sind.

12. Vorrichtung nach einem oder mehreren der vorstehenden Ansprüche, dadurch gekennzeichnet, dass der Auffangbehälter (11), in Seitenansicht gesehen, etwa sichelförmig ausgebildet ist und das Einfüllrohr (10) des Kraftstoffbehälters an dessen Umfang teilweise umschliesst.

**Claims**

1. Device for deaerating fuel tanks in motor vehicles having a venting line (12, 13) which leads from the fuel tank and discharges into the atmosphere, and in which a non-return valve (24, 25) temporarily closing the venting line, is arranged at the highest point in the venting line when the vehicle is in the normal position, for e. at the filler pipe (10), and in which a collecting tank (11) is interposed, characterised in that in the interior of the collecting tank (11) the non-return valve (24, 25) is arranged at its base on a socket-shaped formation (22) whereby the valve space (33, 34) opposite the end (35) of the entering venting line, by a valve seat (25) which co-operates with a valve ball (24) loosely arranged inside the valve space (33, 34) and that extending from the central valve seat (25) towards the wall of the socket-shaped formation, there are inclined faces (31, 32) which serve as guide surfaces for the valve ball (24).

2. Device in accordance with claim 1, characterised in that, the eminence (35) corresponds in height approximately to the diameter of the valve ball (24).

3. Device in accordance with claim 2, characterised in that the eminence (35) is provided with several radial relieving slots (36), preferably three of them arranged at uniform angular spacing from each other, at distances of 120°.

4. Device in accordance with one or more of claims 1 to 3, characterised in that a insert (29) forming the valve seat (25) and the inclined faces (31, 32), is arranged in the socket-shaped formation (22).

5. Device in accordance with claim 4, characterised in that the insert (29) is provided with a slotting which has a width corresponding approximately to the diameter of the valve ball (24) and divides the valve space into two chambers (33, 34).

6. Device in accordance with claim 5, characterised in that through the upper end closure of the slotting in the insert (29), there are formed two diametrically opposite inclined faces (31, 32) enclosing the valve seat (25) between them, and serving to guide the valve ball (24).

7. Device in accordance with claim 5 or 6, characterised in that the two valve chambers (33, 34) formed by the slotting in the insert (29) are arranged parallel with the longitudinal axis of the vehicle (arrow direction 30).

8. Device in accordance with one or more of the foregoing claims, characterised in that the valve seat (25) is formed by a blind-end bore (26) whose diameter is somewhat greater than the diameter of the valve ball (24), and that in a rearward prolongation, the blind-end bore is tapered towards a bore (28) of about 1.5 mm diameter, by way of a conical step-down (27).

9. Device in accordance with one or more of the claims 1 to 8, characterised in that inclined faces (31, 32) each form an angle ( ) of about 60° with respect to the longitudinal central axis (23) of the socket-shaped formation (11).

10. Device in accordance with one or more of the foregoing claims, characterised in that the connection (13) for the part of venting line discharging into the open atmosphere, is arranged parallel with the connection (12) for the part of the venting line at the base (21) of the collecting tank (11) coming from the fuel tank.

11. Device in accordance with claim 10, characterised in that the two connections (12, 13) for the venting line to the base (21) of the collecting tank (11) lie at an angle ( ) of about 55°, whereby they are directed away from the filler pipe (10) of the fuel tank.

12. Device in accordance with one or more of the foregoing claims, characterised in that, seen in side elevation, the collecting vessel (11) is made substantially sickleshaped and partially encloses the filler pipe of the fuel tank at its periphery.

**Revendications**

1. Dispositif de purge d'air d'un réservoir à combustible d'un véhicule automobile avec une conduite de purge d'air (12, 13) partant du réservoir à combustible et débouchant dans l'atmosphère, dans laquelle est disposé, dans une position surélevée du véhicule en position normale, par exemple sur la tubulure de remplissage, un clapet de retenue (24, 25) pour la fermeture momentanée de la conduite de purge d'air et en réservoir récepteur (11) intercalé dans la conduite de purge d'air, caractérisé en ce que le clapet de retenue (24, 25) est disposé dans le volume intérieur du réservoir récepteur au fond d'un renflement (22) en forme de manchon dont la chambre de clapet (33, 34) est limitée par un siège de clapet (25) central opposé à l'extrémité de la conduite de purge d'air qui y débouche et formant une partie en saillie (35), le siège de soupape coopérant avec une bille de clapet (24) disposée librement à l'intérieur de la chambre de clapet (33, 34) et en ce que des surfaces obliques (31, 32) s'étendant depuis le siège de clapet (25) jusqu'à la paroi du renflement (22) en forme de manchon servent de surface de guidage pour la bille de clapet (24).

2. Dispositif selon la revendication 1, caractérisé en ce que la hauteur de la partie en saillie (35) correspond à peu près au diamètre de la bille de clapet (24).

3. Dispositif selon la revendication 2, caractérisé en ce que la partie en saillie (35) comporte plusieurs, de préférence trois fentes radiales de purge d'air (36) disposées uniformément à une écartement angulaire du 120°.

4. Dispositiv selon l'une ou plusieurs des revendications 1 à 3, caractérisé en ce qu'une pièce encastrée (29) est disposée dans le renflement (22) en forme de manchon, et constituant le siège de clapet (25) et les surfaces obliques (31, 32).

5. Dispositif selon la revendication 4, caractérisé en ce que la pièce encastrée (29) comporte une mortaise dont la largeur correspond à peu près au diamètre de la bille de clapet (24) et par laquelle la chambre de clapet est divisée en deux chambres (33, 34).

6. Dispositif selon la revendication 5, caractérisé en ce que deux surfaces obliques (31, 32) diamétralement opposées, pour guider la bille de clapet (24) et délimitant entre elles le siège de clapet (25) sont formées par le fond d'extrémité supérieure de la mortaise dans la pièce encastrée (29).

7. Dispositif selon le revendication 5 ou 6, caractérisé en ce que les deux chambres de clapet (33, 34) formées par la mortaise dans la pièce encastrée (29) sont disposées parallèlement à l'axe longitudinal du véhicule (direction de la flèche 30).

8. Dispositif selon l'une ou plusieurs des revendications précédentes, caractérisé en ce que le siège de clapet (25) est formé par un trou borgne (26) sont le diamètre est en peu supérieur au diamètre de la bille de clapet (24) et en ce que le trou borgne est rétréci dans un prolongement arrière, par l'intermediaire d'un épaulement conique (27) en un trou (28) d'un diamètre d'environ 1,5 mm.

9. Dispositif selon l'une ou plusieurs des revendications 1 à 8, caractérisé en ce que les surfaces obliques (31, 32) font chacune un angle (β) d'environ 60° avec l'axe longitudinal (23) du renflement (22) en forme de manchon.

10. Dispositif selon l'une ou plusieurs des revendications précédentes caractérisé en ce que le raccord (13) pour la partie débouchant dans l'atmosphère libre de la conduite de purge d'air est disposé parallèlement au raccord (12) de la partie de la conduite de purge d'air provenant du réservoir à combustible, au fond (21) du réservoir récepteur (11).

11. Dispositif selon la revendication 10, caractérisé en ce que les deux raccords (12, 13) pour la conduite de purge d'air font avec le fond (21) du réservoir récepteur (11) un angle (α) d'environ 55°, en s'éloignant de la tubulure de remplissage (10) du réservoir à combustible.

12. Dispositif selon l'une ou plusieurs des revendications précédentes caractérisé en ce que le réservoir récepteur (11) vu par le côté est réalisé en forme de croissant et entoure partiellement à sa périphérie la tubulure de remplissage (10) du réservoir à combustible.

Fig.1

Fig.2

0 011 247

29  34  30

35

33

22  36

Fig.3

27  28

26

31  /3

25

29

35

12  32

24  22

23

Fig.4